# EUROPEAN PATENT SPECIFICATION

(11) **EP 1 123 170 B1**
(45) Date of publication and mention of the grant of the patent: **15.01.2003**
(21) Application number: 99951248.6
(22) Date of filing: 15.10.1999
(51) Int. Cl.: B21D 5/02, G01B 5/24

(54) **APPARATUS FOR BENDING WORKPIECES AND MEASURING DEVICE FOR SUCH AN APPARATUS**
VORRICHTUNG ZUM BIEGEN VON WERKSTÜCKEN UND MESSGERÄT FÜR DIESE VORRICHTUNG
APPAREIL PERMETTANT DE PLIER DES PIECES ET DISPOSITIF DE MESURE POUR LEDIT APPAREIL

(30) Priority: 19.10.1998 NL 1010344; 14.12.1998 NL 1010801
(43) Date of publication of application: 16.08.2001
(73) Proprietor: Liet, Cornelis Hendricus, NL-7581 PJ Losser (NL)
(72) Inventor: Liet, Cornelis Hendricus, NL-7581 PJ Losser (NL)
(74) Representative: Voncken, Bartholomeus Maria Christiaan
(86) International application number: NL9900640
(87) International publication number: WO00023208

(56) References cited:
- WO-A-96/41690
- DE-A- 2 044 199
- FR-A- 2 362 722
- GB-A- 2 072 551

## Description

The invention relates to an apparatus for bending workpieces as set forth in the preamble of claim 1.

An apparatus of this kind is known from FR-A-2 362 722. With this prior art apparatus it is assumed that the angle which is derived from the difference in displacement amounts to half the bending angle. This is only correct, however, if the folding line of the workpiece and the bending line of the punch are in alignment with the direction of the bending operation, which is not the case under all circumstances. This may lead to measuring errors when, using the prior art device. GB-A-2 072 551 discloses an apparatus for bending workpieces wherein a feeler with associated displacement gauge is mounted on either side of the bending line of the punch, so that the angle can be measured on either side of the bending line. The angle is thereby derived from the displacement of one feeler, which likewise leads to a less accurate measurement of the bending angle.

WO-A-9641690 finally discloses an apparatus for bending workpieces comprising a measuring device fitted with two feelers, which are in contact with the workpiece on either side of the bending line, wherein the possible shift of the folding line of the workpiece relative to the bending line of the punch can be derived from a displacement of the feelers in a direction transversely to the bending line. In this prior art apparatus, slots are formed in the housing for the feelers, which slots intersect the bending line, so that said slots need to be narrow. This makes the feelers relatively vulnerable.

The object of the invention is to provide an improved apparatus of the kind referred to in the introduction.

In order to accomplish that objective, the apparatus according to the invention is characterized as set forth in claim 1.

Thus, an apparatus is obtained wherein the bending angle is derived from the angles which are measured by two feelers on either side of the bending line of the punch, which makes it possible to determine the bending angle with great accuracy. Since the feelers are spaced apart in the direction of the bending line, the feelers can be of relatively robust construction. Moreover, the feelers only project from the sloping flanks of the housing of the measuring device, so that the bending line of the housing is not interrupted at the location of the feelers.

Finally, the invention provides a method for calibrating the measuring device as set forth in claim 12.

The invention will be explained in more detail hereafter with reference to the drawing, which highly schematically represents an embodiment of the apparatus for bending workpieces according to the invention.

Fig. 1 is a perspective view of a part of an embodiment of the apparatus for bending workpieces according to the invention.

Fig. 2 is a perspective view of the apparatus according to Fig. 1, seen from the other side of the punch.

Fig. 3 is a cross-sectional view of the measuring device which is used with the apparatus according to Fig. 1, at the location of a first feeler on the left-hand side of the bending line.

Fig. 4 is a cross-sectional view corresponding to Fig. 3, at the location of a second feeler on the same side of the bending line as the feeler shown in the cross-sectional view of Fig. 3.

Fig. 5 is a partial cross-sectional view of the measuring device at the location of a first feeler on the right-hand side of the bending line of the apparatus of Fig. 1.

Fig. 6 is a cross-sectional view corresponding to Fig. 3 of an alternative embodiment of the measuring device.

Fig. 7 is a top plan view, partially in sectional view, of the measuring device of Fig. 3, along line VII-VII.

Figs. 8A-8C are a sectional view, a top plan view and a side view, respectively, of a unit for measuring the spring-back.

Fig. 9 is a perspective view of a part of another embodiment of the apparatus for bending workpieces according to the invention.

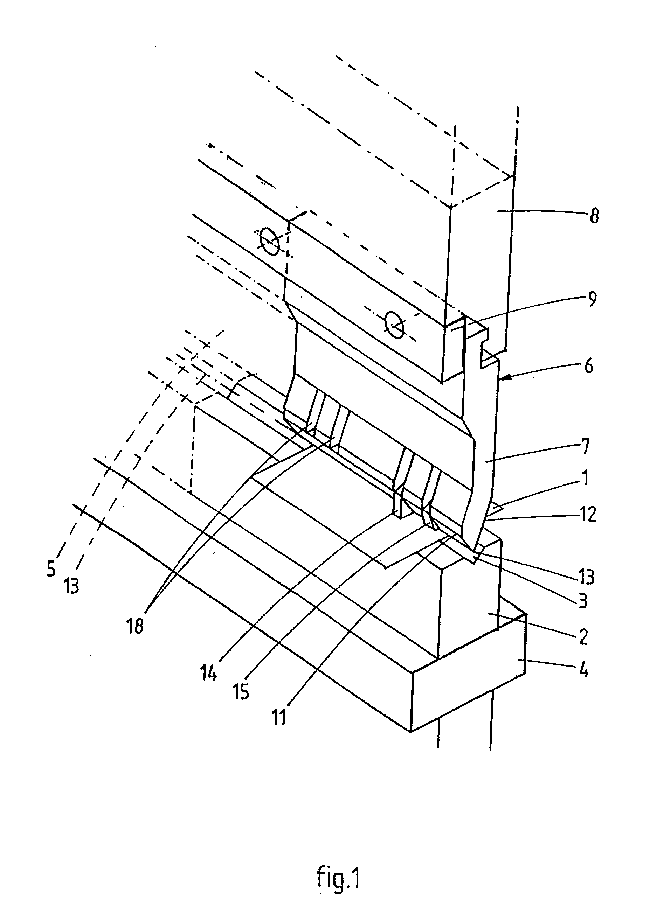

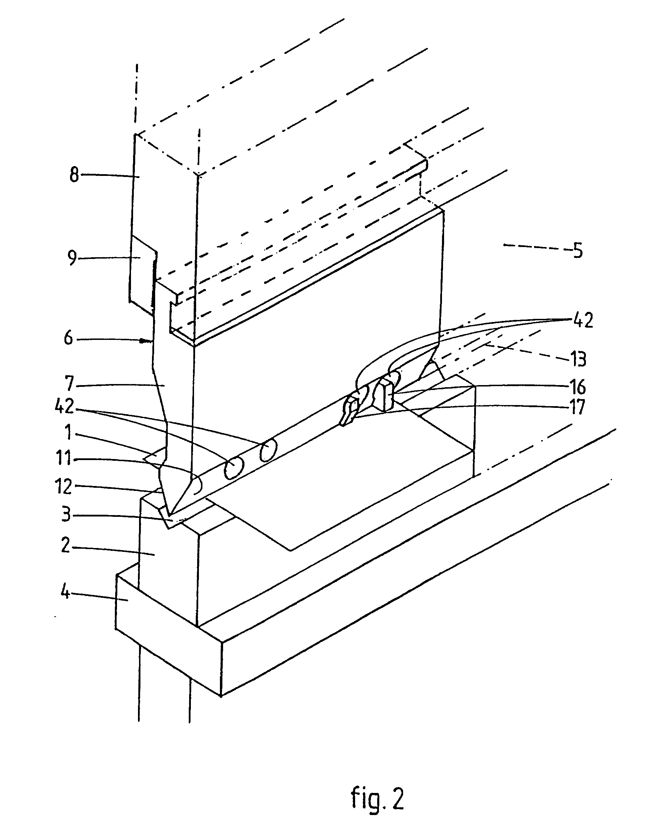

Figs. 1 and 2 show in perspective view a part of an apparatus for bending workpieces, in particular plate-shaped workpieces. In the drawing, a relatively small plate-shaped workpiece 1 is shown by way of example. The bending apparatus comprises a die 2 provided with a groove 3 of V-shaped cross-section, which die 2 is supported on a table 4 of The bending apparatus. The bending apparatus furthermore comprises a punch 5, which is schematically indicated by dashed lines. Aligned with punch 5 is a measuring device 6 for measuring the bending angle of the workpiece 1. The measuring device includes a housing 7, whereby the shape of at least the end thereof corresponds to the shape of the end of punch 5. Housing 7 is mounted in an upper beam 8 of The bending apparatus by means of a clamp 9, in a similar manner as punch 5. Although the measuring device 6 is mounted on one end of the upper beam 8 in Figs. 1 and 2, it is also possible to mount the measuring device 6 at another location in upper beam 8, if desired. Furthermore it is possible to accommodate more than one measuring device in the upper beam.

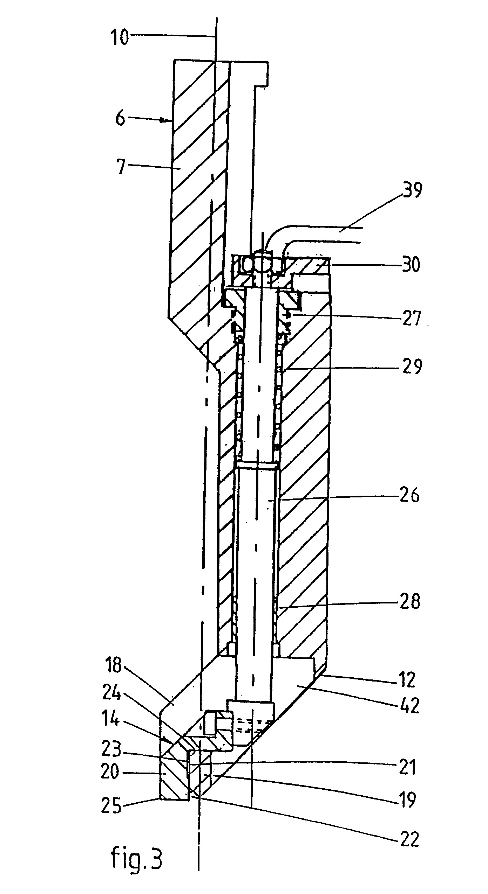

The bending apparatus further comprises a driving unit (not shown) for moving die 2 and punch 5 relative to each other in a bending operation direction for carrying out a bending operation on workpiece 1. The direction of the bending operation is indicated by a broken line 10 in the sectional views of Figs. 3 - 6. The construction of The bending apparatus does not form part of the present invention, and consequently it will not be described in more detail herein. The construction may be of a kind which is known per se.

As is apparent from Figs. 1 - 6, housing 7 as well as punch 5 have an end with sloping flanks 11, 12, which define a bending line 13 extending in the longitudinal direction of punch 5 and housing 7. Said sloping flanks 11, 12 furthermore define a V-shaped cross-section. The shapes of the ends of housing 7 and punch 5 correspond to each other to such an extent that flanks 11, 12 and the bending line 13 of the housing and the punch are in line with each other. Although the shape of the entire housing 7 corresponds to that of punch 5 in the embodiment as described herein, this is not necessary. Important is that the flanks which are operative during the bending operation and the bending line are in alignment with each other.

Measuring device 6 includes two pairs of feelers 14, 15 and 16, 17, respectively, wherein one pair of feelers 14, 15 is mounted on the left-hand side and the other pair of feelers 16, 17 is mounted on the right-hand side of bending line 13 in the view according to Fig. 1. Each feeler 14 - 17 is movably mounted in housing 7, preferably in the direction of the bending operation 10, and projects from the sloping flank 11 or 12 of housing 7. The projecting ends of the feelers 14 - 17 are in contact with the workpiece 1 during a bending operation, wherein all feelers 14 - 17 project relative to the bending line 13 of punch 5 and housing 7 in the illustrated position of rest of feelers 14 - 17, seen in the direction 10 of the bending operation as indicated in the views illustrated in the drawing.

Housing 7 is of massive construction, substantially similar to punch 5, wherein a feeler chamber 18 for each feeler 14 - 17 is formed in housing 7, at least in the V-shaped end defined by sloping flanks 11, 12. A guide dam 19 is thereby maintained at the location of bending line 13. As a result of this, bending line 13 is not interrupted, not even at the location of feelers 14 - 17. This makes it possible to form the feeler chambers 18 with a relatively large width in the direction of bending line 13, as is apparent from Figs. 1 and 2. Feeler chambers 18 are open on the respective side of bending line 13, in the direction 10 of the bending operation and in a direction transversely thereto. Each feeler 14 - 17 comprises a feeler body 20, which occupies the entire space in the feeler chamber 18 to the left and to the right of the guide dam 19. The feeler body 20 is thus of robust construction, whereby the feeler body is substantially retained within feeler chamber 18. The feeler is thus capable of withstanding comparatively rough operating conditions during use of The bending apparatus.

The guide dam 19 in feeler chambers 18 includes a guide surface 21 for the associated feeler 14 - 17, which guide surface extends parallel to the direction of movement of the associated feeler with great accuracy, which direction corresponds to the direction 10 of the bending operation in the preferred embodiment as described herein. The feeler body 20 of each feeler 14 - 17 includes a second guide surface 22, which mates with guide surface 21 and which abuts against said guide surface 21. Since a small recession 23 is formed in feeler body 20, the dimension of the guide surface 22 is considerably smaller, seen in the direction of the bending operation, than the corresponding dimension of the guide surface 21 of guide dam 19. One the one hand, an accurate guidance of the feeler in the direction 10 of the bending operation is thus ensured, whilst on the other hand wear on the guide surfaces 21, 22 caused by the presence of dirt particles or the like is prevented.

The feeler body 20 of each feeler 14 - 17 is furthermore accurately guided in the associated feeler chamber 18 so as to prevent rotation of the feeler. To this end, guide means (not shown) extending transversely to the bending line may be present on the walls of each feeler chamber 18.

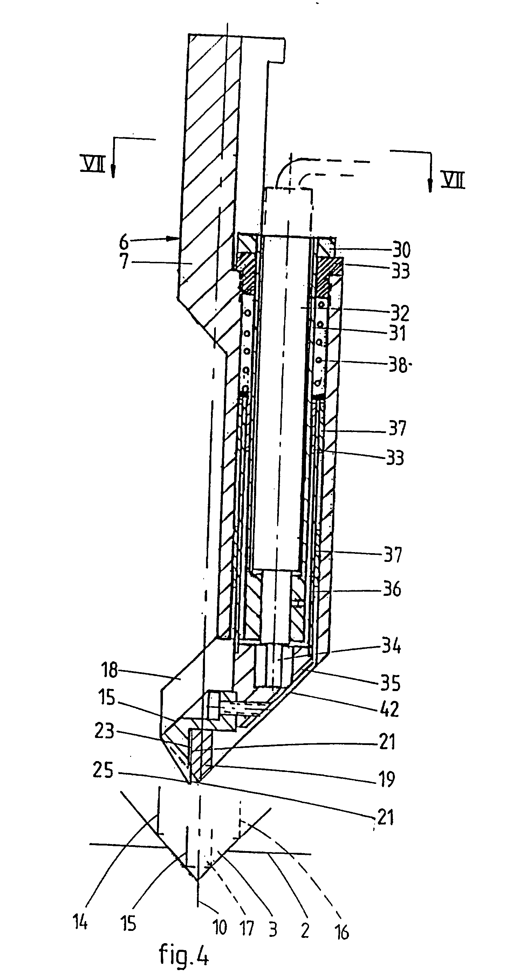

Each guide dam 19 furthermore includes a stop surface 24 for the associated feeler 14 - 17, which determines the position of rest of feelers 14 - 17 as illustrated in the drawing. As already noted above, each feeler 14 - 17 projects relative to the bending line 13 in this position of rest. The feeler body 20 of each feeler 14 - 17 comprises a contact line 25 located outside feeler chamber 18, which contact line extends parallel to bending line 13. As is apparent from Figs. 3 and 4, the contact line 25 of feeler 14 is located at a larger distance from bending line 13 than the contact line 25 of feeler 15.

In Fig. 4, the die 2 including the V-shaped groove 3 is schematically represented, whereby it is indicated that the contact line 25 of feeler 14 is located outside V-shaped groove 3, whilst the contact line 25 of feeler 15 is located within said groove 3. As is apparent from this schematic representation, feelers 14, 15 and 16, 17, respectively, are displaced over different distances relative to bending line 13 during the bending operation, whereby the angle through which the respective part of the workpiece 1 has been bent can be derived from this difference in displacement. The manner in which said difference in displacement is measured will be described yet hereafter.

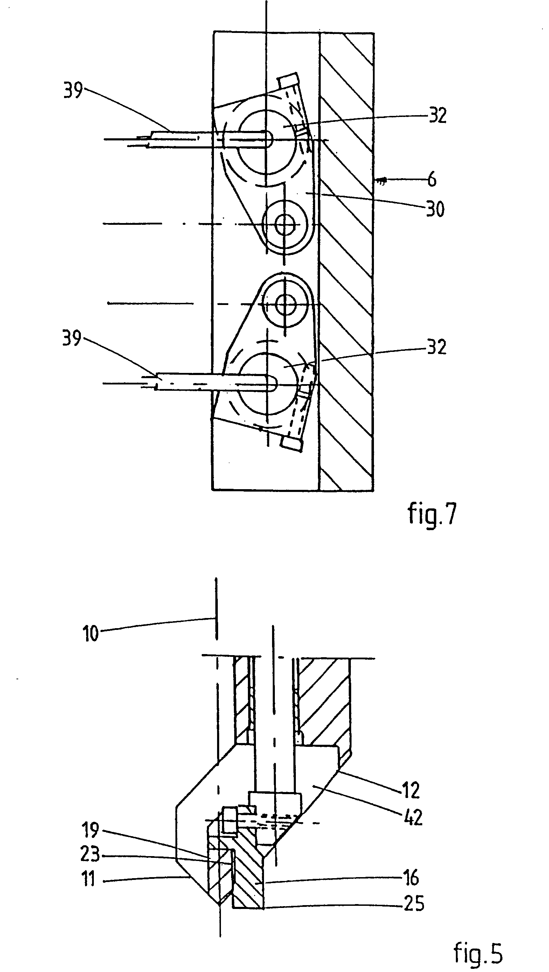

Fig. 5 is partial sectional view of feeler 16. It will be apparent that feeler 17 is essentially the mirror image of feeler 15, so that the angle through which the respective part of workpiece 1 has been bent can be measured on the right-hand side of bending line 13 as well. In Fig. 4 the positions of feelers 16, 17 are indicated by means of a dashed line. Since the angles are measured on either side of bending line 13, a highly accurate measurement of the angle through which the workpiece has been bent is possible.

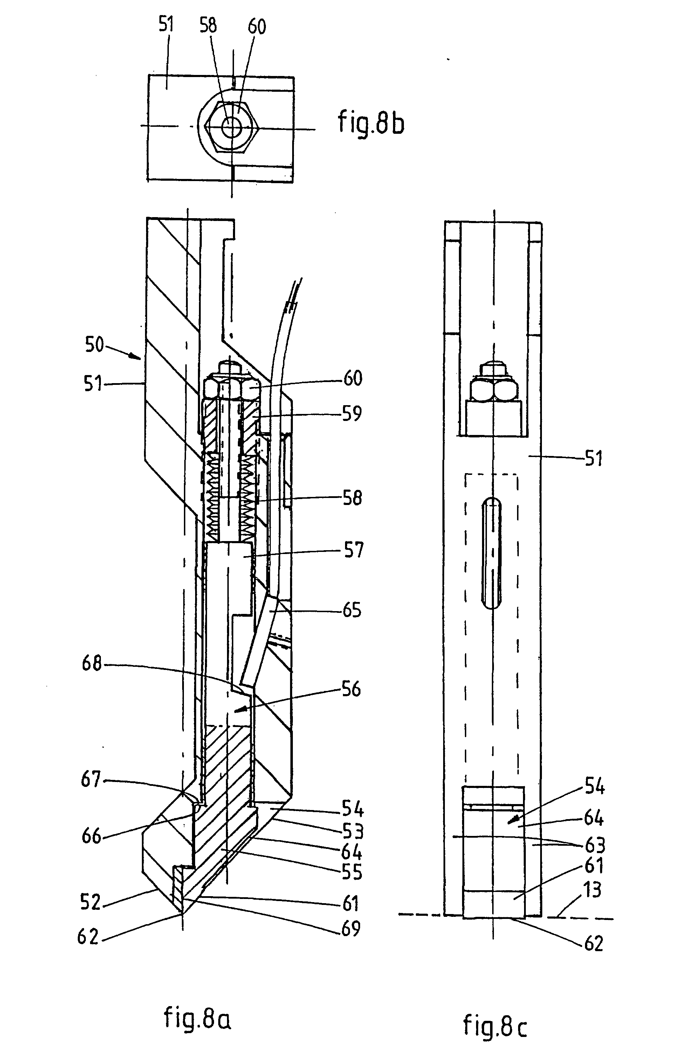

In the embodiment as described herein, the feeler 14 is connected to a lower end of a feeler rod 26, which is movably mounted in housing 7. In the preferred embodiment as described herein, the direction of movement of the feeler rod is the same as the direction 10 of the bending operation. This is not absolutely necessary, however. What is necessary is that the direction of movement of the feeler rod 26 is precisely parallel to guide surfaces 21, 22. Numerals 27 and 28 indicate guides or slide bearings for feeler rod 26. A spring 29 loads the feeler rod, and thus feeler 14, in such a manner that the feeler is pressed on the stop surface 14 of guide dam 19 in the position of rest. At its upper end, feeler rod 26 is connected to a connecting piece 30 as illustrated in Fig. 7, which connects feeler rod 26 to a holder 31 of a displacement gauge 32. Said displacement gauge 32 is preferably in the form of a glass ruler. Holder 31 is likewise movably mounted in housing 7, for which purpose slide bearings 33 are provided. Also as regards the direction of movement.of holder 31 it applies that it is preferably the same as the direction 10 of the bending operation. Said direction of movement must be precisely parallel to guide surfaces 21, 22, however. It will be apparent from the foregoing that a displacement of feeler 14 in the direction 10 of the bending operation will result in a corresponding displacement of holder 31 of displacement gauge 32.

A measuring pin 34 of displacement gauge 32 is connected to feeler 15 by means of a connecting piece 35, as is shown in the sectional view of Fig. 4. Connecting piece 35 is also engaged by a feeler tube 36, which is mounted in housing 7 in such manner as to be movable in the direction 10 of the bending operation. Slide bearings 37 are provided for this purpose. A spring 38 loads the feeler tube 36 such that feeler 15 is pressed on the stop surface 24 of the associated guide dam 19 in the illustrated position of rest. It will be apparent that displacement of feeler 15 in the direction 10 of the bending operation will result in a corresponding displacement of measuring pin 34 of displacement gauge 32.

When a bending operation is carried out on workpiece 1, the two feelers 14, 15 will undergo a displacement in the direction 10 of the bending operation, whereby the above-described connections between feelers 14, 15 and displacement gauge 32 enable displacement gauge 32 to measure the difference in displacement between the two feelers 14, 15. The measuring signal from displacement gauge 32 is supplied, via a connection 39 (schematically indicated), to a processing unit (not shown), which may include a microprocessor. The difference in displacement between feelers 16, 17 on the right-hand side of bending line 13 is measured in a similar manner. The processing unit derives the bending angle of workpiece 1 from the measuring signals of the two displacement gauges 32. This makes it possible to measure the bending angle of the workpiece with great accuracy.

In the illustrated embodiment, the displacement gauge 32 is connected to feeler 14 via connecting piece 30. Preferably, displacement gauge 32 is connected to feeler 15 and measuring pin 34 is connected to feeler 14. As a result of this, the distance over which displacement gauge 32 moves during a bending operation will be smaller and a more compact construction of housing 7 is possible.

It is noted that measuring device 6 may include a guide element for each connecting piece 30, which guide element only allows up-and-down movement of the connecting piece. This prevents any rotary movements which may lead to measurement inaccuracies and which may cause wear. Such a guide element may for example consist of a pin mounted on the housing, which engages in a slot of the connecting piece.

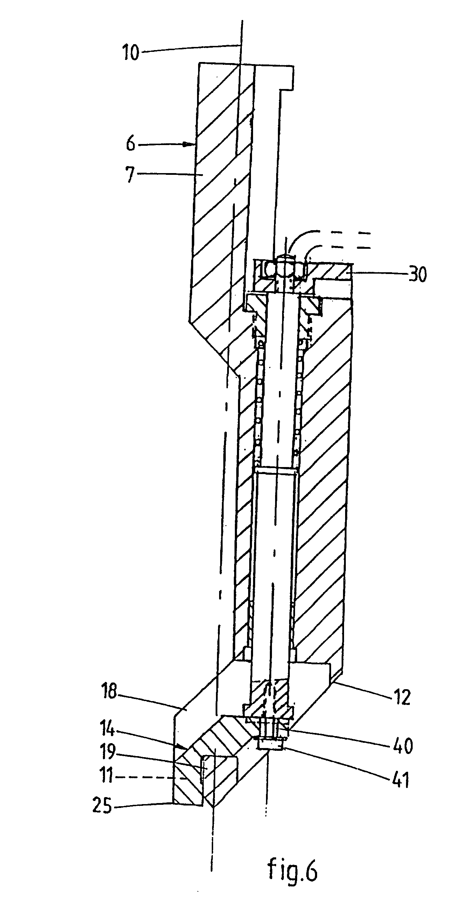

The above-described construction of the feelers and guides on guide dam 19 has the advantage that a force including a component directed at the guide surface 21 of guide dam 19 is exerted on feelers 14 - 17 by the workpiece 1 during bending. This means that an accurate guidance of feelers 14 - 17 by guide dam 19 is ensured. In accordance with a preferred embodiment of the measuring device 6 as described herein, in order to enable an optimally accurate guiding, the connection between each feeler 14 - 17 and feeler rod 26 and connecting piece 35 is adjustable in a direction transversely to bending line 13. This embodiment is shown in sectional view for feeler 14 in Fig. 6. As is apparent from this sectional view, feeler 14 is provided with a slotted hole 40, so that feeler 14 is movable in a direction transversely to the bending line 13 relative to the bolt 41 used for said connection. As a result of this, the mutual abutment of guide surfaces 21, 22 can be adjusted independently of any manufacturing tolerances of the various components of measuring device 6.

In the embodiment of the bending apparatus as illustrated in the drawing, feelers 14 - 17 have a contact line 25. Such a contact line might cause damage to the surface of the workpiece. In order to prevent this, it is possible to form the feeler body 20 with a rounded portion having a small, predetermined radius rather than use a contact line 25. This rounding can be taken into account upon calculation of the bending angle by the processing unit.

The measuring device 6 described herein is also used for measuring any rebound of workpiece 1. It is a known fact that when a workpiece is bent by means of the bending apparatus disclosed herein, the workpiece is not only deformed plastically, but also undergoes a slight elastic deformation. The resulting rebound of workpiece 1 is measured by moving back the punch 5 after the bending operation, whereby the return movement is stopped the moment punch 5 no longer exerts a pressure on the workpiece. This moment during the return movement can be detected by mounting a small feeler (not shown) in the bending line of housing 7, which feeler slightly projects beyond bending line 13. As soon as this feeler starts to move with respect to housing 7 during the return movement of the punch, the return movement will be stopped and the difference between the bending angles at, respectively, the beginning and the end of the return movement of punch 5 can be determined.

Figs. 8A-8C show in cross-sectional view, top plan view and side view, respectively, a rebound measuring unit 50, which can be used advantageously in the apparatus for bending workpieces as disclosed herein. As is apparent from the cross-sectional view, unit 50 comprises a housing 51 whose end has sloping flanks 52 and 53, which are in line with the sloping flanks 11 of the punch and of the housing 7, respectively. A feeler chamber 54 is recessed in the sloping flank 53, into which the end 55 of a rebound feeler 56 extends. Rebound feeler 56 comprises a feeler rod 57, which is guided in a bore of housing 51 and which is pressed down by plate springs on the side remote from end 55. Plates springs 58 are confined between a nut 59 mounted in the bore of housing 51 and a shoulder of feeler rod 57, with a nut 60 being provided on the end of feeler rod 57 that is passed through nut 59, by means of which nut 60 the spring pressure of plate springs 58 can be adjusted. This spring pressure can thus be selected in dependence on the workpiece that is to be bent.

Rebound feeler 56 is capable of upward and downward movement in housing 51, whereby the end 55 projects from feeler chamber 54 when no bending operation is being carried out. The sloping flank 52 of housing 51 has an end edge bounding feeler end 55, which is in line with the bending line 13 of the punch and of housing 7. Feeler end 55 likewise comprises a sloping flank 61 with an end edge which projects with respect to bending line 13 in the position of rest as shown in Fig. 8, and which is in line with bending line 13 when a bending operation is being carried out. As is apparent from Fig. 8C, the feeler end 55 is positioned between end walls 63 of housing 51, so that unintentional damage to spring-back feeler 56 is practically excluded. The sloping flank 61 of feeler end 55 comprises an inwardly staggered portion 64, so that any unevennesses of the workpiece, or dirt particles or the like, cannot load the spring-back feeler 56 against the action of plate springs 58.

Provided in housing 51 is a detector 65, which is in the form of a proximity switch in the embodiment described herein. When the spring-back feeler 56 is pressed inwards during a bending operation, so that end edge 62 is aligned with bending line 13, a stop 66 of the feeler will strike against a stop 67 of the housing, so that the spring-back feeler cannot move inwards any further. In this position, the detector 65 will detect the pressed-down position of the return feeler 56, in that a detection surface 68 is detected by the proximity feeler. As soon as the spring-back feeler 56 is moved downwards by the plate springs 57 during the return movement of punch 5, this will be signalled by detector 65 and the return movement will be stopped. Then the difference between the bending angles at the beginning and the end, respectively, of the turn movement of punch 5 can be determined.

As is apparent from the cross-sectional view of Fig. 8B, housing 51 and spring-back feeler 56 comprise mating guide surfaces 69, which join the end edges of sloping flanks 52 and 61, respectively.

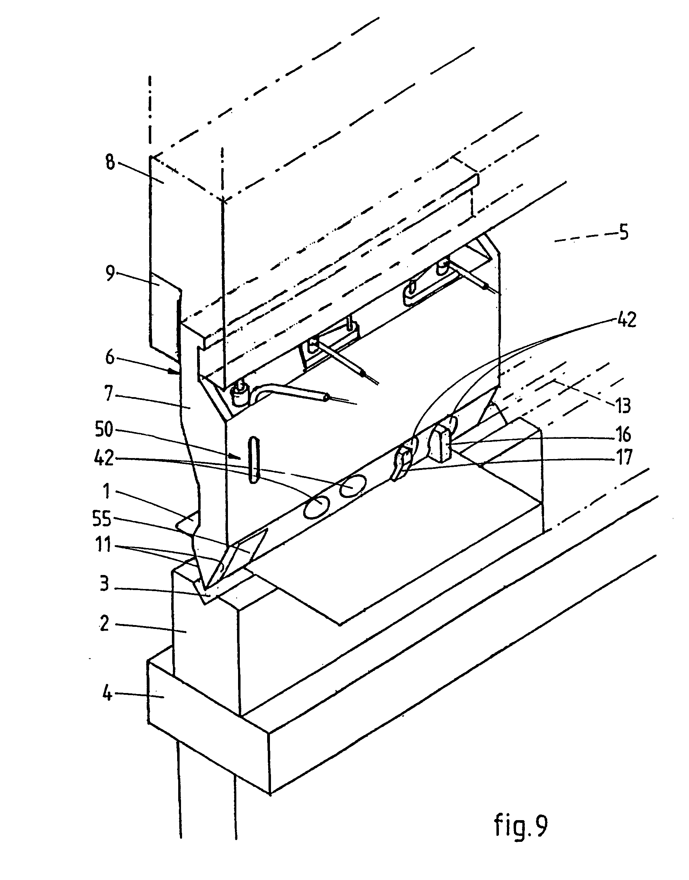

Fig. 9 is a perspective view of an embodiment of the apparatus disclosed herein, wherein the spring-back measuring unit 50 and the measuring device as disclosed have a common housing 70. The advantage of this is that The bending apparatus only needs to be fitted with one measuring device, by means of which the bending angle and the spring-back can be measured.

The measuring device 6 which is used in the bending apparatus that is disclosed herein is calibrated by placing a calibration plate on die 2 as the workpiece, and by moving down punch with a small force, in such a manner that the calibration plate cannot deform. When punch 5 does not move downward any further, the measuring values of displacement gauge 32 are set at a predetermined value, for example zero, because the feelers pairs 14, 15 and 16, 17 lie in one plane in this position.

In order to further increase the accuracy, a second calibration step can be carried out by means of a calibration gauge having a V-shaped groove with sloping flanks, which include an angle of 90° with great accuracy. Said calibration gauge is placed under punch 5, and subsequently the punch is pressed into the V-shaped groove without deforming the calibration gauge. The difference in displacement between feelers 14, 15 and 16, 17 must then exactly correspond to an angle of 45°. Since the measured displacement equals the horizontal distance between the feelers at this angle, it is possible to record this horizontal distance accurately in the processing unit. The processing unit can then use this information for accurately converting the measuring values obtained from the displacement gauges into angle measuring values.

The invention is not restricted to the above-described embodiments, which can be varied in several ways without departing from the scope of the claims. In the above-described embodiments, for example, one displacement gauge is used for measuring the difference in displacement between the two feelers positioned on one side of the bending line. It is also possible, however, to use one displacement gauge for each feeler and to use the measuring results for calculating the differences.

It is furthermore noted that in the above-described embodiments of the apparatus the sloping flanks of housing 7 and 51 are indeed in line with the sloping flanks 11, 12 of punch 5, but that this is not necessary. If desired, the sloping flanks of housing 7 and 51 may also include a more acute angle with the direction of the bending operation.

## Claims

1. Apparatus for bending workpieces (1), in particular plate-shaped workpieces, comprising a die (2), a punch (3) having a punch end with sloping flanks (11, 12), which define a bending line extending in the longitudinal direction of the punch (5) and a V-shaped cross-section, a driving unit for moving the die and the punch relative to each other in a bending operation direction for carrying out a bending operation, and a measuring device (6) for measuring a bending angle of the workpiece, which measuring device comprises a housing (7) having an end whose shape corresponds to that of the end of the punch (5), such that at least the bending line (13) of the housing (7) is in line with that of the punch (5), wherein two movable feelers (14, 15) are mounted in the housing (7), on one side of the bending line, which feelers (14, 15) project from the respective sloping flank of the housing and whose projecting ends are in contact with the workpiece (1) during a bending operation, wherein the opposite ends of the pair of feelers are connected to a displacement gauge, which is capable of measuring the difference in displacement between the two feelers during a bending operation, which displacement gauge is connected to a processing unit, which is capable of deriving the bending angle of the workpiece from the difference in displacement between the two feelers (14, 15) during a bending operation, **characterized in that** two corresponding movable feelers (16, 17) are mounted on the other side of the bending line as well, wherein each two feelers present on the same side of the bending line are spaced apart in the direction of the bending line, and wherein the displacement gauges of both pairs of feelers are positioned on the same side of the bending line.

2. Apparatus according to claim 1, wherein the housing is of substantially massive construction, and wherein a feeler chamber for each feeler is formed in the housing, in the V-shaped end formed by the sloping flanks, wherein a guide dam for the feeler is provided at the location of the bending line, which guide dam includes a guide surface for the feeler, and wherein the feeler includes a second guide surface which abuts against the guide surface of the guide dam.

3. Apparatus according to claim 2, wherein each feeler chamber is open on one side of the bending line, in the direction of the bending operation and in a direction transversely to the plane of the bending line and to the direction of the bending operation, wherein each feeler comprises a massive feeler body, which is positioned beside the guide dam in the space of the feeler chamber, and which has a contact point or contact line parallel to the bending line, which is located outside the feeler chamber.

4. Apparatus according to claim 2 or 3, wherein the dimension of the second guide surface of the feeler in the direction of the bending operation is considerably smaller than the corresponding dimension of the guide surface of the guide dam.

5. Apparatus according to any one of the claims 2-4, wherein the guide dam includes a stop surface which determines a position of rest for the feeler.

6. Apparatus according to any one of the claims 2-5, wherein the direction of movement of the feeler rod and of the displacement gauge extends parallel to the guide surfaces of the guide dam and the feeler, respectively, which direction of movement preferably corresponds to the direction of the bending operation.

7. Apparatus according to claim 6, wherein the connection between the feeler and the associated end of the displacement gauge is adjustable in a direction transversely to the bending line, such that the guide surfaces of the feeler and of the guide dam can be positioned in precise abutment with each other.

8. Apparatus according to any one of the preceding claims comprising a unit for measuring the spring-back of a workpiece, which unit is provided with a spring-back feeler, which is loaded by a spring member towards a position of rest in which it projects with respect to the bending line, and which is brought in line at least with the bending line, against the action of the spring member, by the workpiece when a bending operation is being carried out, wherein a detection element is provided, which signals the fact that the bending line and the spring-back feeler are out of alignment upon return movement of the punch, which unit comprises a housing including a feeler chamber in which the spring-back sensor is so mounted that it is capable of upward and downward movement, wherein the housing includes a sloping flank, one end edge of which is in line with the bending line, and wherein the feeler has an end with a sloping flank, one end edge of which is in line with the bending line during a bending operation.

9. Apparatus according to claim 8, wherein the housing includes a guide surface which joins the end edge of the sloping flank and which extends parallel to the direction of the bending operation, wherein the spring-back feeler includes a corresponding, mating guide surface, which joins the end edge of the sloping flank of the spring-back feeler, wherein the housing and the spring-back feeler include mating stop surfaces, which abut against each other when the end edge of the spring-back feeler is in line with the bending line.

10. Apparatus according to claim 8 or 9, wherein the spring pressure of the spring member is adjustable.

11. Apparatus according to claim 8, 9 or 10, wherein the spring-back measuring unit and the measuring device have a common housing.

12. A method for calibrating a measuring device in a bending apparatus according to any one of the preceding claims, wherein a flat calibration plate is placed under the punch and the punch and the die are moved together with a force which is not capable of deforming the calibration plate, wherein, in the position in which the punch presses on the calibration plate, the measuring signals from the displacement gauges are set at a predetermined value, and wherein next a calibration gauge including flanks that include an angle of 90° with each other is placed under the punch and the punch and the die are moved together with a force which is not capable of deforming the calibration plate, wherein, in the position in which the punch presses on the calibration plate, the measuring signals from the displacement gauges are recorded as a measure for the horizontal distance between each pair of associated feelers.

## Patentansprüche

1. Vorrichtung zum Biegen von Werkstücken (1), insbesondere plattenförmigen Werkstücken, aufweisend eine Druckplatte (2), einen Stempel (5) mit einem Stempelende mit abgeschrägten, eine sich in der Längsrichtung des Stempels (5) erstreckende Biegelinie definierenden Flanken (11, 12) und einein V-förmigen Querschnitt, eine Antriebseinheit, um die Druckplatte und den Stempel relativ zueinander in einer Biegebetätigungsrichtung zur Durchführung einer Biegebetätigung zu bewegen und eine Messvorrichtung (6) zum Messen eines Biegewinkels des Werkstücks, wobei die Messvorrichtung ein Gehäuse (7) aufweist, welches einen Endabschnitt mit einer der Form des Endabschnitts des Stempels (5) entsprechenden Form derart aufweist, dass zumindest die Biegelinie (13) des Gehäuses (7) mit derjenigen des Stempels (5) fluchtend ist, wobei in dem Gehäuse (7) zwei bewegliche Fühler (14, 15) auf einer Seite der Biegelinie befestigt sind, wobei die Fühler (14, 15) von der entsprechenden abgeschrägten Flanke des Gehäuses vorragen und wobei deren vorragende Endabschnitte während einer Biegebetätigung mit dem Werkstück (1) in Kontakt stehen, wobei die gegenüberliegenden Enden des Paares von Fühlern mit einer Verschiebungsmessvorrichtung fest verbunden sind, mittels der die Verschiebungsdifferenz zwischen den beiden Fühlern während einer Biegebetätigung messbar ist, und wobei die Verschiebungsmessvorrichtung an eine Verarbeitungseinheit angeschlossen ist, mittels derer der Biegewinkel des Werkstücks aus der Verschiebungsdifferenz zwischen den beiden Fühlern (14, 15) während einer Biegebetätigung bestimmbar ist,
**dadurch gekennzeichnet, dass** zwei entsprechende bewegliche Fühler (16, 17) auch auf der anderen Seite der Biegelinie befestigt sind, wobei jeder der jeweils auf derselben Seite der Biegelinie vorhandenen Fühler jeweils in Richtung der Biegelinie beabstandet ist, und wobei die Verschiebungsmessvorrichtungen der beiden Paare von Fühlern auf derselben Seite der Biegelinie angeordnet sind.

2. Vorrichtung nach Anspruch 1, wobei das Gehäuse einen im wesentlichen massiven Aufbau aufweist, und wobei für jeden Fühler eine Fühlerkammer in dem Gehäuse im von den abgeschrägten Flanken ausgebildeten V-förmigen Ende ausgebildet ist, wobei am Ort der Biegelinie ein Führungsdamm für den Fühler vorgesehen ist, wobei der Führungsdamm eine Führungsfläche für den Fühler aufweist, und wobei der Fühler eine zweite Führungsfläche aufweist, welche an der Führungsfläche des Führungsdamms anliegt.

3. Vorrichtung nach Anspruch 2, wobei jede Fühlerkammer auf einer Seite der Biegelinie, in Richtung der Biegebetätigung und in einer zur Ebene der Biegelinie und zur Richtung der Biegebetätigung querverlaufenden Richtung offen ist, wobei jeder Fühler einen massiven Fühlerkörper aufweist, welcher neben dem Führungsdamm im Raum der Fühlerkammer angeordnet ist und welcher einen Kontaktpunkt oder eine parallel zur Biegelinie verlaufende Kontaktlinie aufweist, die außerhalb der Fühlerkammer angeordnet ist.

4. Vorrichtung nach Anspruch 2 oder 3, wobei die Abmessungen der zweiten Führungsfläche des Fühlers in Richtung der Biegebetätigung wesentlich kleiner als die entsprechenden Abmessungen der Führungsfläche des Führungsdammes sind.

5. Vorrichtung nach einem der Ansprüche 2 bis 4, wobei der Führungsdamm eine Stoppfläche aufweist, welche eine Stützposition für den Fühler bestimmt.

6. Vorrichtung nach einem der Ansprüche 2 bis 5, wobei die Bewegungsrichtung des Fühlerstabes und der Verschiebungsmessvorrichtung parallel zu den Führungsflächen des Führungsdammes beziehungsweise des Fühlers verläuft, wobei die Bewegungsrichtung vorzugsweise der Richtung der Biegebetätigung entspricht.

7. Vorrichtung nach Anspruch 6, wobei die Verbindung zwischen dem Fühler und dem zugeordneten Ende der Verschiebungsmessvorrichtung in einer zur Biegelinie querverlaufenden Richtung so einstellbar ist, dass die Führungsflächen des Fühlers und des Führungsdammes so positionierbar sind, dass sie präzise aneinander anliegen.

8. Vorrichtung nach einem der vorhergehenden Ansprüche, aufweisend eine Messeinheit zum Messen des Rückfederns eines Werkstücks, wobei die Messeinheit mit einem Rückfederungsfühler versehen ist, welcher mittels eines Federelementes in einer Stützposition vorgespannt ist, in welcher er bezüglich der Biegelinie vorragt, und welcher gegen die Wirkung des Federelementes mittels des Werkstücks bei Durchführung einer Biegebetätigung in Ausrichtung zumindest mit der Biegelinie gebracht wird, wobei ein Nachweiselement vorgesehen ist, welches es signalisiert, falls die Biegelinie und der Rückfederungsfühler bei Zurückbewegung des Stempels nicht fluchtend sind, wobei die Messeinheit ein Gehäuse aufweist, welches eine Fühlerkammer aufweist, in der der Rückfederungsfühler so befestigt ist, dass mittels ihm eine Aufwärts- oder Abwärtsbewegung messbar ist, wobei das Gehäuse eine abgeschrägte Flanke aufweist, deren eine Endkante mit der Biegelinie fluchtend ist, und wobei der Fühler ein Ende mit einer abgeschrägten Flanke aufweist, deren eine Endkante während einer Biegebetätigung mit der Biegelinie fluchtend ist.

9. Vorrichtung nach Anspruch 8, wobei das Gehäuse eine Führungsfläche aufweist, welche an die Endkante der abgeschrägten Flanke angrenzt und sich parallel zur Richtung der Biegebetätigung erstreckt, wobei der Rückfederungsfühler eine entsprechende, Gegenführungsfläche aufweist, die an die Endkante der abgeschrägten Flanke des Rückfederungsfühlers angrenzt, wobei das Gehäuse und der Rückfederungsfühler Gegenstoppflächen aufweisen, die aneinander anliegen, wenn die Endkante des Rückfederungsfühlers mit der Biegelinie fluchtend ist.

10. Vorrichtung nach Anspruch 8 oder 9, wobei die Federkraft des Federelementes regelbar ist.

11. Vorrichtung nach einem der Ansprüche 8, 9 oder 10, wobei die Rückfederungsmesseinheit und die Messvorrichtung ein gemeinsames Gehäuse aufweisen.

12. Verfahren zum Kalibrieren einer Messvorrichtung in einer Biegevorrichtung nach einem der vorherigen Ansprüche, wobei eine flache Kalibrierungsplatte unter dem Stempel angeordnet wird und wobei der Stempel und die Druckplatte gemeinsam mit einer Kraft bewegt werden, mittels der keine Deformierung der Kalibrierungsplatte möglich ist, wobei in der Position, in der der Stempel auf die Kalibrierungsplatte drückt, die Messsignale von den Verschiebungsmessvorrichtungen auf einen vorbestimmen Wert gesetzt werden, und wobei anschließend eine Kalibrierungsmessvorrichtung mit zueinander einen Winkel von 90° einschließenden Flanken unterhalb des Stempels angeordnet wird, und wobei der Stempel und die Druckplatte gemeinsam mit einer Kraft bewegt werden, mittels der keine Deformierung der Kalibrierungsplatte möglich ist, und wobei in der Position, in welcher der Stempel auf die Kalibrierungsplatte drückt, die Messsignale von den Verschiebungsmessvorrichtungen als Maß für den horizontalen Abstand zwischen jedem Paar zugeordneter Fühler aufgezeichnet werden.

## Revendications

1. Appareil permettant de plier des pièces (1), notamment des pièces en forme de plaques, comprenant une matrice (2), un poinçon (5) ayant une extrémité de poinçonnage à flancs inclinés (11, 12), qui définissent une ligne de pliage s'étendant dans la direction longitudinale du poinçon (5) et une section en forme de V, une unité d'entraînement pour déplacer la matrice et le poinçon l'un par rapport à l'autre dans la direction d'une opération de pliage pour effectuer une opération de pliage, et un dispositif de mesure (6) pour mesurer un angle de pliage de la pièce à usiner, lequel dispositif de mesure comprend un boîtier (7) ayant une extrémité dont la forme correspond à celle de l'extrémité du poinçon (5), de sorte qu'au moins la ligne de pliage (13) du boîtier (7) soit alignée avec celle du poinçon (5), dans lequel deux palpeurs mobiles (14, 15) sont montés dans le boîtier (7) d'un côté de la ligne de pliage, lesquels palpeurs (14, 15) font saillie par rapport au flanc incliné respectif du boîtier, leurs extrémités faisant saillie étant en contact avec la pièce (1) pendant l'opération de pliage, dans lequel les extrémités opposées de la paire de palpeurs sont reliées à une jauge de déplacement qui est capable de mesurer la différence de déplacement entre les deux palpeurs pendant une opération de pliage, laquelle jauge de déplacement est reliée à une unité de traitement qui est capable de déterminer l'angle de pliage de la pièce à partir de la différence de déplacement entre les deux palpeurs (14, 15) pendant une opération de pliage, **caractérisé en ce que** deux palpeurs mobiles correspondants (16, 17) sont également montés de l'autre côté de la ligne de pliage, dans lequel chacun des deux palpeurs présent du même côté de la ligne de pliage sont mutuellement espacés dans la direction de la ligne de pliage, et dans lequel les jauges de déplacement des deux paires de palpeurs sont positionnées du même côté de la ligne de pliage.

2. Appareil selon la revendication 1, dans lequel le boîtier présente une structure sensiblement massive et dans lequel une chambre de palpeur pour chaque palpeur est formée dans le boîtier, dans l'extrémité en forme de V formée par les flancs inclinés, dans lequel une barre de guidage destinée au palpeur est prévue à l'emplacement de la ligne de pliage, laquelle barre de guidage comporte une surface de guidage destinée au palpeur, et dans lequel le palpeur comporte une seconde surface de guidage qui vient buter contre la surface de guidage de la barre de guidage.

3. Appareil selon la revendication 2, dans lequel chaque chambre de palpeur est ouverte d'un côté de la ligne de pliage, dans la direction de l'opération de pliage et dans une direction transversale au plan de la ligne de pliage et à la direction de l'opération de pliage, dans lequel chaque palpeur comprend un corps palpeur massif qui est positionné derrière la barre de guidage dans l'espace de la chambre de palpeur, et qui présente un point de contact ou une ligne de contact parallèle à la ligne de pliage, qui est situé à l'extérieur de la chambre de palpeur.

4. Appareil selon la revendication 2 ou 3, dans lequel la dimension de la seconde surface de guidage du palpeur dans la direction de l'opération de pliage est très inférieure à la dimension correspondante de la surface de guidage du seuil de guidage.

5. Appareil selon l'une quelconque des revendications 2-4, dans lequel la barre de guidage comporte une surface de butée qui détermine une position de repos pour le palpeur.

6. Appareil selon l'une quelconque des revendications 2-5, dans lequel la direction de mouvement de la tige de palpeur et de la jauge de déplacement s'étend respectivement parallèlement aux surfaces de guidage de la barre de guidage et du palpeur, laquelle direction de mouvement correspond de préférence à la direction de l'opération de pliage.

7. Appareil selon la revendication 6, dans lequel la liaison entre le palpeur et l'extrémité associée de la jauge de déplacement est réglable dans une direction transversale à la ligne de pliage de telle façon que les surfaces de guidage du palpeur et de la barre de guidage puissent être positionnées en butée précise l'une contre l'autre.

8. Appareil selon l'une quelconque des revendications précédentes, comprenant une unité destinée à mesurer le retour élastique d'une pièce, laquelle unité est munie d'un palpeur de retour élastique, qui est chargé par un élément formant ressort vers une position de repos à laquelle il fait saillie par rapport à la ligne de pliage, et qui est amené à être aligné par la pièce avec au moins la ligne de pliage en s'opposant à l'action de l'élément formant ressort, lorsqu'une opération de pliage est effectuée, dans lequel un élément de détection est prévu, celui-ci signalant le fait que la ligne de pliage et que le palpeur de retour élastique ne sont plus alignés lors du mouvement de retour du poinçon, laquelle unité comprend un boîtier comportant une chambre de palpeur dans laquelle est monté le capteur de retour élastique, de façon à ce qu'il soit capable de se déplacer vers le haut et vers le bas, dans lequel le boîtier comporte un flanc incliné dont une arête est alignée avec la ligne de pliage et dans lequel le palpeur a une extrémité à flanc incliné dont une arête est alignée avec la ligne de pliage pendant une opération de pliage.

9. Appareil selon la revendication 8, dans lequel le boîtier comporte une surface de guidage qui rejoint l'arête d'extrémité du flanc incliné et qui s'étend parallèlement à la direction de l'opération de pliage, dans lequel le palpeur de retour élastique comporte une surface de guidage complémentaire correspondante qui rejoint l'arête d'extrémité du flanc incliné du palpeur de retour élastique, et dans lequel le boîtier et le palpeur de retour élastique comportent des surfaces de butée complémentaires qui viennent buter l'une contre l'autre lorsque l'arête d'extrémité du palpeur de retour élastique est alignée avec la ligne de pliage.

10. Appareil selon la revendication 8 ou 9, dans lequel la pression de ressort de l'élément formant ressort est réglable.

11. Appareil selon la revendication 8, 9 ou 10, dans lequel l'unité de mesure de retour élastique et le dispositif de mesure ont un boîtier commun.

12. Procédé pour étalonner un dispositif de mesure dans un appareil de pliage selon l'une quelconque des revendications précédentes, dans lequel une plaque d'étalonnage plane est placée en dessous du poinçon et le poinçon et la matrice sont déplacés ensemble avec une force qui ne permet pas de déformer la plaque d'étalonnage, dans lequel, à la position à laquelle le poinçon appuie sur la plaque d'étalonnage, les signaux de mesure provenant des jauges de déplacement sont réglés à un valeur prédéterminée, et
dans lequel une jauge d'étalonnage ayant des flancs qui forment un angle de 90° l'un par rapport à l'autre est ensuite placée sous le poinçon et le poinçon et la matrice sont déplacés ensemble avec une force qui ne permet pas de déformer la plaque d'étalonnage, dans lequel, à la position à laquelle le poinçon appuie sur la plaque d'étalonnage, les signaux de mesure provenant des jauges de déplacement sont enregistrés en tant que mesures de la distance horizontale entre chaque paire de palpeurs associés.
